Europäisches Patentamt

European Patent Office

Office européen des brevets

(11) Veröffentlichungsnummer: **0 189 879**

A1

## (12) EUROPÄISCHE PATENTANMELDUNG

(21) Anmeldenummer: 86101026.2

(22) Anmeldetag: 25.01.86

(51) Int. Cl.⁴: **F 16 K 31/02**
**B 60 H 1/00**

(30) Priorität: 31.01.85 DE 3503151

(43) Veröffentlichungstag der Anmeldung:
06.08.86 Patentblatt 86/32

(84) Benannte Vertragsstaaten:
FR GB IT SE

(71) Anmelder: **MANNESMANN Aktiengesellschaft**
**Mannesmannufer 2 Postfach 5501**
**D-4000 Düsseldorf 1(DE)**

(72) Erfinder: **Brüne, Bernhard**
**Schölerpad 221**
**D-4300 Essen 11(DE)**

(54) Absperrvorrichtung für Automobilheizungssysteme.

(57) Bei einer Absperrvorrichtung für gasförmige oder flüssige Medien führende Rohrleitungen (2) steuert ein Stellorgan (5) den Volumenstrom, wobei das Stellorgan über einen Stellmotor (6) angetrieben ist.

Um den Bauaufwand bei derartigen Absperrvorrichtungen zu verringern und diese weitestgehend ohne mechanisch bewegte Teile zu betreiben und eine automatische Rückstellung in die Ausgangslage bei Störungen sicherzustellen, wird vorgeschlagen, daß der Stellmotor (6) von einem Metallbauelement (9) aus einer Legierung mit vorzugsweise martensitischem Gefüge gebildet, das kaltverformbar ist und dem eine elektrisch betriebene, als Ohm'scher Widerstand ausgebildete Heizung (8) zugeordnet ist.

Fig. 1

EP 0 189 879 A1

Die Erfindung betrifft eine Absperrvorrichtung für
gasförmige oder flüssige Medien führende Rohrleitungen,
die der Rohrleitung zugeordnet den Durchfluß mit einem Stellorgan steuert, das über einen Stellmotor angetrieben ist,
insbesondere von Hand oder durch entsprechende Regeleinrichtung betätigbares Schieberventil im Heizungssystem von Automobilen.

Derartige Absperrvorrichtungen werden in der Industrie
und im Hausbereich vielfältig eingesetzt, um den Durchfluß
von Medien in Rohrleitungen zu regeln. Dabei sind einfachste
Ausführungen, wie ein von Hand zu betätigender Schieber
bis zu komplizierten, elektromotorisch oder hydraulisch
pneumatisch arbeitenden Vorrichtungen bekannt. Bei den
motorisch betriebenen Absperrvorrichtungen wird das Stellorgan über den entsprechend angetriebenen Stellmotor in
die jeweilige Lage gebracht, wobei die Stellenergie in der
Regel von Hand gesteuert wird.

Für die Erwärmung des Fahrgastraums von Automobilen
wird die Wärme des Kühlwassers ausgenutzt. Der Kühlwasserfluß wird dabei durch ein Schieberventil mit einem Stellmotor
und einem diesen zugeordneten Stellorgan beeinflußt, wobei
das Stellorgan entweder durch einen Bowdenzug oder einem
getrennten Servomotor mit Getriebe jeweils so eingestellt
wird, daß mehr oder weniger Kühlwasser durch die entsprechende Rohrleitung fließt. Je nach Ausrüstung des Heizungssystems wird das Schieberventil direkt betätigt oder aber
über eine Steuerung bzw. Regelung unter Berücksichtigung
des jeweiligen Standes des Stellorgans bzw. der Temperatur
im Fahrgastraum beeinflußt. Nachteilig bei all diesen bekannten Systemen ist neben der aufwendigen Ausbildung mit
Elektromotoren und Getrieben, daß nach Abschalten der Stellenergie die während des Stellvorgangs erzeugte Schaltstellung
erhalten bleibt, was insbesondere bei auftretenden Störungen oder Schäden dazu führen kann, daß das Heizungssystem beispielsweise im Sommer nicht abgestellt oder im Winter nicht
eingestellt werden kann. Schließlich ist von Nachteil, daß
Zwischenstellungen nur mit unangemessem großem Bauaufwand
zu realisieren sind und daß die einzelnen mechanisch betriebenen Teile einem erheblichen Verschleiß unterliegen.

Der Erfindung liegt die Aufgabe zugrunde, den Bauaufwand
bei derartigen Absperrvorrichtungen zu verringern, sie weitgehenst ohne mechanisch bewegte Teile zu betreiben und eine
automatische Rückstellung in die Ausgangslage bei Störungen
sicherzustellen.

Die Aufgabe wird erfindungsgemäß dadurch gelöst, daß
der Stellmotor von einem Metallbauelement aus einer Legierung
mit vorzugsweise martensitischem Gefüge gebildet und das
kaltverformbar ist und dem eine vorzugsweise elektrisch
betriebene, als Ohmscher Widerstand ausgebildete Heizung
zugeordnet ist.

Der Stellmotor stellt somit einen besonders einfachen
Motor dar, der ohne mechanisch bewegte, insbesondere drehende
Teile auskommt, so daß bei überraschend einfachem Aufbau
Verschleiß nur in ganz geringem Umfange auftreten kann.
Besonders vorteilhaft ist, daß das Metallbauteil nach einem
Stellvorgang, d.h. nach Abschalten der Stellenergie sofort
in seine Ursprungslage zurückstrebt, so daß Störungen im
System nicht zu negativen Einflüssen des Heizungssystems
führen. Andererseits kann durch Beaufschlagung der Heizung
mit einem bestimmten Haltestrom erreicht werden, daß das
Stellorgan in dem jeweils vorgegebenen Bereich verharrt.
All dies wird entweder durch direkte Betätigung, beispielsweise durch einen einfachen Elektroschalter erreicht, über
eine Steuerung mit Sollwertvorgabe und Überprüfung des Iststandes des Stellorgans oder durch eine Regelung unter Be-

- 8 -

rücksichtigung aller Faktoren. Damit ist ein sehr vielseitiges, andererseits aber im Aufbau einfaches Heizungssystem oder auch eine Klimaanlage insbesondere für Automobile geschaffen.

Nach einer zweckmäßigen Ausbildung ist vorgesehen, daß das Metallbauelement durch Torsion, Zug, Druck oder Biegung kaltverformbar und durch Wärmezufuhr seine ursprüngliche Form vor der Kaltverformung teilweise oder ganz wieder annehmend ausgebildet ist. Ein solches Metallbauelement erzeugt die für die Auslösung der Stellbewegung des Stellorgans notwendigen Drehmomente oder Kräfte vorteilhaft sicher und gleichmäßig dadurch, indem eine reversible martensitische temperaturabhängige Gefügeumwandlung in dem Metallbauelement dazu führt, daß das Martensitgefüge nach Erreichen einer legierungspezifischen Umwandlungstemperatur seine ursprüngliche Form vor der Kaltverformung, teilweise oder ganz wieder annimmt, wobei durch Wärmeübergang von der Heizung zum Metallbauelement die notwendige Stellenergie transportiert wird, die zum Erreichen der Umwandlungstemperatur oder höherer Temperaturen in dem Metallbauelement notwendig ist.

Die jeweilige Stellbewegung wird erfindungsgemäß beendet oder unterbrochen, indem die durch den Wärmeübergang von der Heizung zum Metallbauelement transportierte Wärmemenge verringert und eine weitere Gefügeumwandlung in dem Metallbauelement verhindert wird. Dabei ist es erfindungsgemäß möglich, die augenblickliche Form des Metallbauelementes zu erhalten, indem der Heizung erfindungsgemäß eine Strombegrenzung vorgelagert ist. Auf diese Weise wird das Stellorgan in der betreffenden Position gehalten. Die Stellbewegung des Stellorgans und damit die Gefügeumwandlung in dem Metallbauelement wird fortgesetzt, wenn die in das Metallbauelement induzierte Wärmemenge wieder erhöht wird.

Um das Stellorgan in seine Ausgangslage zurückzubewegen,
wird die Heizung abgestellt. Mit Abkühlung des Metallbauelementes geht das Stellorgan dann in seine Ausgangslage
zurück, wobei dieser Vorgang gemäß der Erfindung dadurch
unterstützt wird, daß dem Stellorgan eine den Rückstellvorgang unterstützende Rückstellfeder zugeordnet ist.

Der Rückstellvorgang kann erfindungsgemäß dadurch weiter
beschleunigt werden, daß das Metallbauelement und/oder die
Heizung und/oder das Gehäuse Kühlrippen oder Kühlflächen
aufweist, vorzugsweise solche, die hohl ausgebildet und
über einen Bypass mit der das Medium führenden Rohrleitung
zu verbinden sind. Unter Beachtung der systemspezifischen
Hysterese sinkt die Temperatur im Metallbauelement unter
die Umwandlungstemperatur des Martensitgefüges, wodurch
dessen Umwandlung bis in seine Ausgangsstruktur vor der
Wärmezufuhr erreicht wird. Dabei gelingt es mit Hilfe der
Kühlung die aus dem Metallbauelement und der Heizung abzuführende Wärme an das Medium abzugeben oder gezielt an die
unmittelbare Umgebung.

Nach einer weiteren zweckmäßigen Ausbildung der Erfindung ist vorgesehen, daß das als Stellmotor dienende Metallbauelement bzw. das Stellorgan im Ruhezustand geöffnet geschaltet ist. Damit fließt der maximale Volumenstrom des
Mediums im Ruhezustand, während die Absperrvorrichtung nach
einer maximalen Stellbewegung geschlossen ist, d.h. der
Volumenstrom des Mediums ist dann null. Hierdurch wird erreicht, daß sowohl bei hohen als auch niedrigen Umgebungstemperaturen die für die jeweiligen Stellbewegungen oder
die Einhaltung einer bestimmten Stellorganposition notwendige
Stellenergie minimiert wird. Bei winterlichen Temperaturen
ist die Absperrvorrichtung bzw. das Stellorgan geöffnet,
ohne daß Stellenergie benötigt wird, so daß die größte Heizleistung der Automobilheizung genutzt werden kann. Bei sommerlichen Temperaturen dagegen ist die unmittelbare Umgebung der Absperrvorrichtung so aufgeheizt, daß es nur einer vergleichsweise geringen Stellenergie bedarf, um die Temperatur des Metallbauelementes so zu erhöhen, daß in möglichst kurzer Zeit eine maximale Stellbewegung des Stellorgans erfolgt und die Absperrvorrichtung damit geschlossen ist. Außerdem ist so sichergestellt, daß bei einem Ausfall der Stellenergie das Stellorgan in seine Ausgangslage zurückgeht, ohne daß dafür Stellenergie benötigt wird. Beispielsweise bei winterlichen Temperaturen ist so die Funktion der Automobilheizung gewährleistet, da das Medium, in diesem Fall das der Automobilheizung zugeführte heiße Kühlwasser mit maximalem Volumenstrom durch die Absperrvorrichtung strömen kann.

Eine einfache und zweckmäßige Ausbildung ist die, bei der die Drehschieberachse als Metallbauelement ausgebildet ist und am freien Ende das als Drehschieber ausgebildete Stellorgan aufweist. Damit ist eine Drehbewegung einfach und zweckmäßig erzielbar, wobei das Stellorgan als solches direkt in die jeweilige Position geschwenkt wird, je nachdem, wieviel Stellenergie bzw. Wärme zugeführt wird.

Nach einer weiteren Ausbildung ist vorgesehen, daß der Drehschieberachse mit dem Drehschieber ein als Stellmotor ausgebildetes, auf sie ein Drehmoment ausübendes Metallbauelement zugeordnet ist, vorzugsweise über Zahnradelemente mechanisch gekoppelt. Mit der Zufuhr von Stellenergie und entsprechenden Umbildung des Martensitgefüges dreht sich das Metallbauelement und übt das gewünschte Drehmoment über die Zahnradelemente auf die Drehschieberachse und damit auf das Stellorgan aus. Hier sind zwar einige wenige mechanische Teile notwendig, doch ist der notwendige konstruktive Aufwand gering. Die entsprechende Ausbildung ist insbesondere für einen Einbau im nachhinein von Vorteil, weil an den vorhandenen mechanischen Teilen der Absperrvorrichtung nur
geringe Änderungen anfallen.

Eine gleichmäßige Beheizung ist dadurch gegeben, daß
die Drehschieberachse konzentrisch von der Heizung eine
Baueinheit bildend umhüllt ist, wobei beide vorzugsweise
einen runden Querschnitt aufweisen. Hierbei wird die von
der Heizung zugeführte Wärme gleichmäßig auf das Metallbauelement übertragen, so daß eine gleichförmige Bewegung des
Stellmotors und des Stellorgans gesichert ist.

Eine weitere Möglichkeit ist die, daß die Heizung konzentrisch von der Drehschieberachse eine Baueinheit bildend
umhüllt ist. Auch auf diese Art und Weise ist eine sichere
Zuführung der für die martensitische Umwandlung benötigten
Wärme bzw. umgekehrt auch Kühlung gesichert.

Schließlich ist es auch möglich, daß das Metallbauelement einen flachen, rechteckigen Querschnitt aufweist und
einseitig oder zweiseitig auf den großen Flächen die Heizung
trägt. Ein solches Metallbauelement ist insbesondere gut
kaltverformbar, wobei in Richtung der Längsachse ein verdrilltes Bauelement entsteht, das sich bei Wärmezufuhr dann
wieder in seine flächige Ursprungsform zurückbewegt. Hierbei
ist es erforderlich, daß die Heizung den Verformungsvorgang
mitvollzieht, wozu sie entsprechend ausgebildet ist.

Sollen zwei Rohrleitungen wechselweise geschlossen
und geöffnet werden, so ist es von Vorteil, dafür einen
Stellmotor zu verwenden, der aus einem frei drehbaren, spiralförmig kaltverformten Metallbauelement besteht, das als
solches den beiden wechselweise beschickbaren Rohrleitungen
zugeordnet ist. Beim Rückverformen des Metallbauelementes
bei Wärmezufuhr wird dann die eine Rohrleitung verschlossen,
während die andere kontinuierlich öffnet. Vorteilhaft ist dabei insbesondere, daß ein fließender Übergang in beiden
Rohrleitungen erzielt wird, so daß nachteilige Stoßbelastungen nicht auftreten.

Zweckmäßigerweise ist die Heizung ein in einem Stromkreis angeordneter Ohmscher Widerstand, der über einen dem
Armaturenbrett zugeordneten Sollwertgeber schaltbar ist.
Dabei kann die Heizung als solche gesondert dem Metallbauelement zugeordnet sein, es ist aber auch denkbar, daß das
Metallbauelement selbst als Stellmotor, d.h. als Ohmscher
Widerstand ausgebildet ist.

Um den jeweiligen Stellwinkel bzw. Öffnungsgrad des
Stellorgans mit in die Steuerung einbeziehen zu können,
ist nach einer weiteren zweckmäßigen Ausbildung der Erfindung
vorgesehen, daß der Drehschieberachse ein Drehpotentiometer
zugeordnet ist, das die Sekundärspannung mit dem Spannungsabfall abgleichend geschaltet ist. Über das Drehpotentiometer
wird der jeweilige Öffnungswinkel ermittelt und beeinflußt
die der Heizung zufließende Sekundärspannung entsprechend,
wodurch ein unnötiger Energiebedarf vermieden und eine zweckmäßige Energiezuführung gesichert ist.

Eine vorteilhafte Regelung der Absperrvorrichtung ist
gegeben, wenn ein im Fahrgastraum angeordnetes Thermostat
mit dem Drehpotentiometer die Sekundärspannung abgleichend
geschaltet ist. Bei einer derartigen Regeleinrichtung ist
gleichzeitig auch die jeweils im Fahrgastraum erzielte bzw.
vorhandene Temperatur mit in den Regelvorgang einbezogen,
ohne daß der Benutzer dazu irgendetwas unternehmen muß.
Er gibt lediglich mit Hilfe des Sollwertgebers den jeweils
gewünschten Sollwert vor, der dann unter Berücksichtigung
des Öffnungswinkels des Stellorgans und wie beschrieben
der Temperatur im Fahrgastraum eingestellt wird.

Ohne jede Drehachse arbeitet die erfindungsgemäße Absperrvorrichtung dann, wenn das Stellorgan einseitig fixiert,
partiell kaltverformt und dort von der Heizung beeinflußt
ausgebildet und angeordnet ist. Durch die partielle Kaltverformung (Biegung) wird durch die entsprechende Erwärmung
in diesem Bereich über die Heizung die gewünschte Stellbewegung erzeugt und zwar direkt im einseitig fixierten Stellorgan.

Ebenfalls im Aufbau einfach ist eine Absperrvorrichtung,
bei der das Stellorgan drehbar gelagert und mit einem kaltverformbaren Metallbauelement seitlich verbunden ist, das
seinerseits als Biegeelement wirkend angeordnet und auf
der dem Stellorgan gegenüberliegenden Seite mit einer Heizung
versehen ist. Über dieses Biegeelement wird das Stellorgan
jeweils gemäß der zugeführten Stellenergie verdreht bzw.
geschwenkt, um so die Rohrleitung teilweise ganz oder gar
nicht bezüglich ihres Durchflußquerschnittes zu beeinflussen.
Das Biegeelement ist in gleicher Höhe des Stellorgans angeordnet, so daß sich vorteilhafte Abmessungen für die gesamte
Absperrvorrichtung ergeben, da ein sehr flachbauendes Absperrelement geschaffen ist. Die Heizung ist entweder wie
erläutert auf der dem Stellorgang gegenüberliegenden Seite
oder auch auf beiden Seiten des flach-, d.h. vorzugsweise
rechteckig ausgebildeten Metallbauelementes angebracht.

Eine weitere Ausbildung des Metallbauelementes sieht
vor, daß es die im Beeinflussungsbereich flexibel ausgebildete Rohrleitung gabelförmig umfassend und im Bereich des
Gabelfußes und/oder der Gabelschenkel eine Heizung aufweisend
ausgebildet ist. Auch bei dieser Ausbildung kann vorteilhaft
auf Drehachsen u.ä. verzichtet werden, weil das Metallbauelement selbst sich als Stellorgan betätigt, das den Strömungsquerschnitt der Rohrleitung beeinflußt. Bei Überschreitung der Umwandlungstemperatur des martensitischen Gefüges
des Metallbauelementes bewegen sich die Gabelschenkel zusammendrückend aufeinander zu und der Durchfluß des Mediums
ist gestoppt oder nur noch in entsprechend verringertem
Volumen möglich.

Lagerkräfte können überhaupt nicht mehr auftreten,
wenn um die Drehschieberachse vorzugsweise zwei Metallbauelemente mit einer Heizung eine Baueinheit bildend angeordnet
sind und zwar so, daß sie mit dem Stellorgan ein Dreigelenk
bilden. Nach Überschreiten der Umwandlungstemperatur des
martensitischen Gefüges der Metallbauteile verlängern oder
verkürzen sich die Metallbauteile je nach vorheriger Kaltverformung und Anordnung und verlagern das bewegliche Gelenk
des Dreigelenkes, was mit einer Verdrehung des Stellorgans
verbunden ist. Negative Kräfte wirken somit nicht auf die
Drehschieberachse, so daß Reibungsverluste nicht gegeben
sind, vor allem aber die Lebensdauer einer derartigen Vorrichtung wesentlich erhöht ist.

Statt der Rückstellfeder ist es auch möglich, ein Metallbauelement mit Heizung einzusetzen und wechselweise
mit dem anderen Metallbauelement mit Heizenergie bzw. Stellenergie zu versorgen. Beide Metallbauelemente wirken somit
gegeneinander und zwar durch wechselweise Heizenergiezuführung jeweils vorteilhaft gleichförmig.

Die Erfindung zeichnet sich insbesondere dadurch aus,
daß auf Getriebe und aufwendige Elektromotorsysteme verzichtet werden kann, daß aber dennoch eine sichere Beeinflussung
des Volumenstroms, d.h. des Kühlwasserstroms in der Rohrleitung gegeben ist. Das als Stellmotor oder auch als Stellorgan
vorgesehene Metallbauelement wirkt als sicherer Motor, der
so gleichmäßig und kontinuierlich arbeitet, daß Druckstöße
im System verhindert sind. Durch entsprechende Steuerung
bzw. Regelung kann das Stellorgan jeweils in seiner durch
Stellenergiezufuhr erzielten Stellung gehalten werden oder aber er schwenkt bei reduzierter Stellenergiezufuhr bzw.
Beenden der Stellenergiezufuhr gleichförmig in seine Ausgangslage zurück. Letzteres ist insbesondere bei Störfällen
von Vorteil, wobei das als Stellmotor dienende Metallbauelement bzw. das Stellorgan im Ruhezustand geöffnet geschaltet ist, so daß auch Störfällen im Winter eine Beheizung
des Fahrgastraumes immer gewährleistet ist. Durch Anordnung
und Ausbildung der einzelnen Bauteile werden Reibungsverluste und damit Verschleiß vermieden, wodurch hohe Standzeiten sichergestellt sind.

Weitere Einzelheiten und Vorteile des Erfindungsgegenstandes ergeben sich aus der nachfolgenden Beschreibung
der zugehörigen Zeichnung, in der bevorzugte Ausführungsbeispiele mit den dazu notwendigen Einzelheiten und Einzelteilen
dargestellt sind. Es zeigen:

Fig. 1   eine Absperrvorrichtung mit Drehschieber
         im Längsschnitt,

Fig. 2   eine Draufsicht auf den Drehschieber gemäß
         Fig. 1,

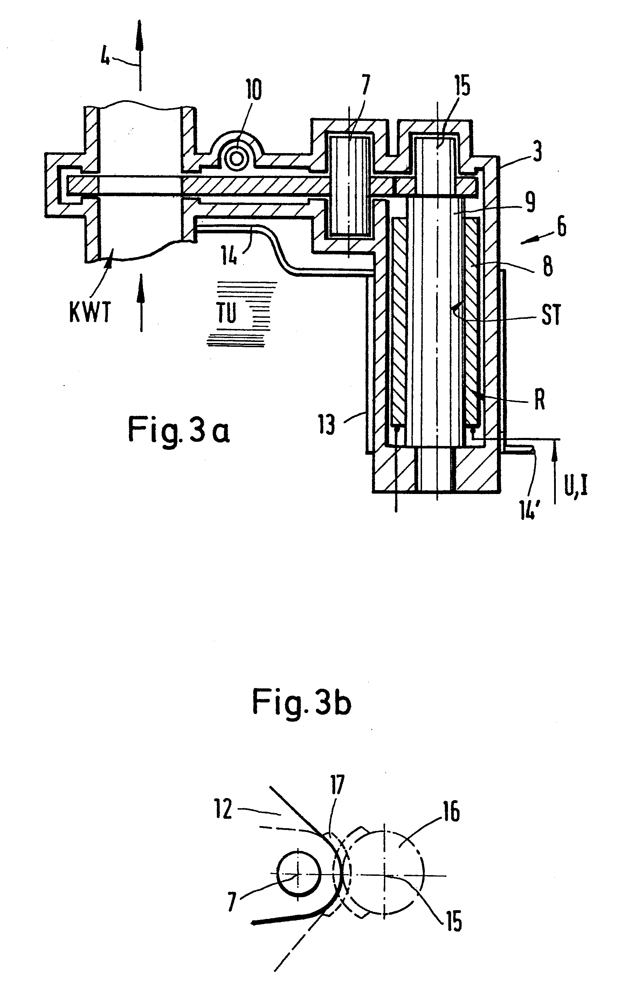

Fig. 3a  eine Absperrvorrichtung im Längsschnitt
         mit gesonderter Drehschieberachse,

Fig. 3b  eine Draufsicht im Bereich der Verbindung
         zwischen Stellmotor und Stellorgan,

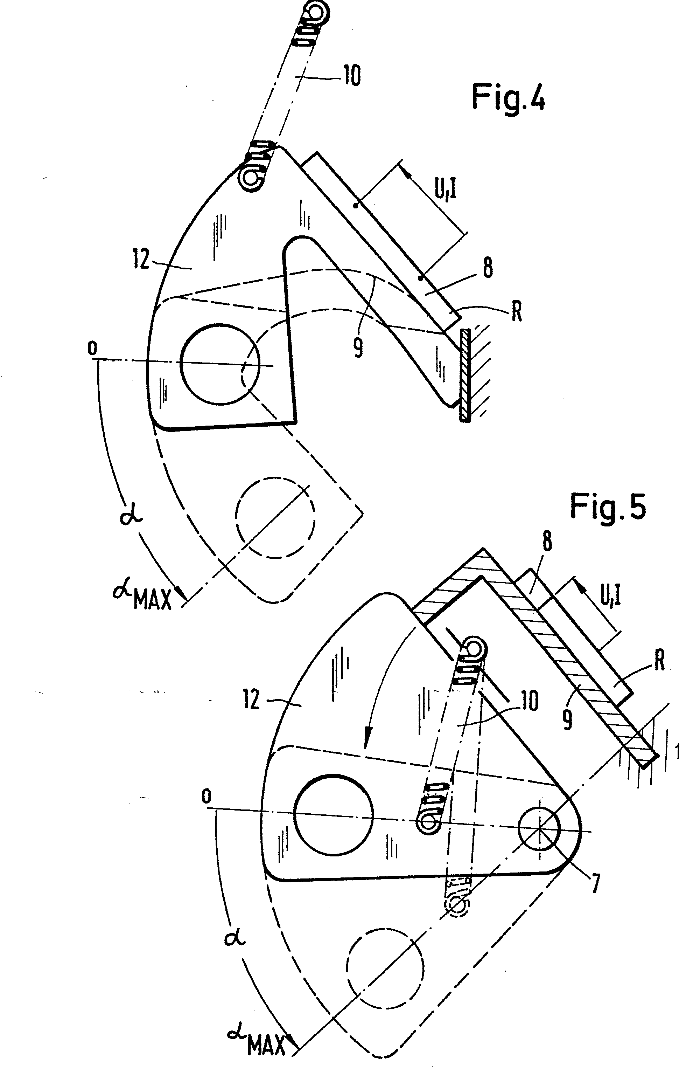

Fig. 4   eine Absperrvorrichtung ohne Drehachse
         in Draufsicht,

Fig. 5   eine Asperrvorrichtung mit als Schiebeteil
         ausgebildetem Stellmotor,

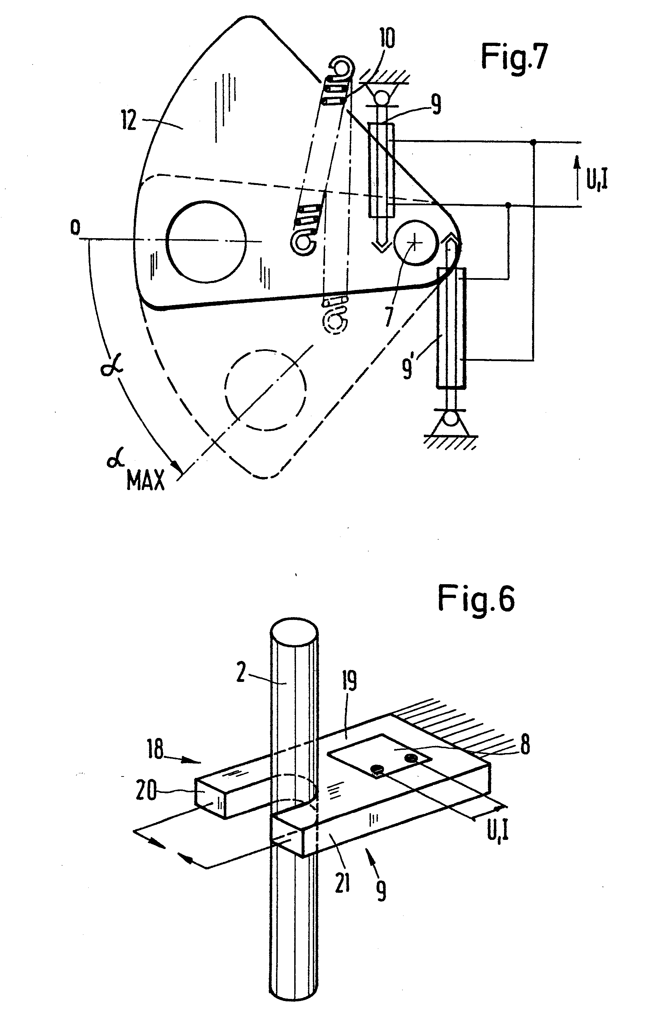

Fig. 6   eine als Klemmvorrichtung ausgebildete
         Absperrvorrichtung in perspektivischer
         Darstellung,

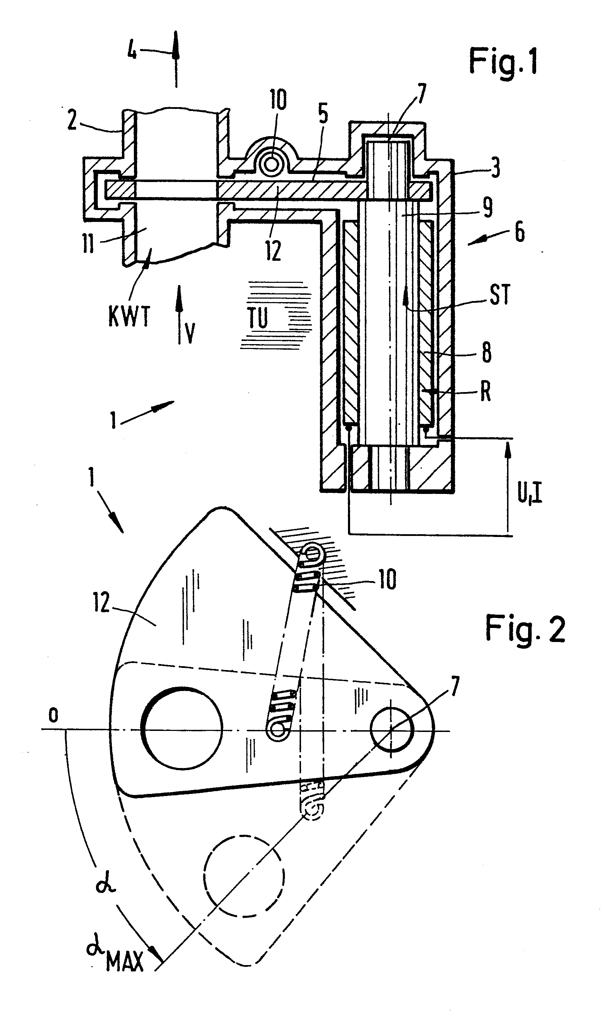

Fig. 7   eine weitere Ausbildung der Absperrvorrichtung nach Fig. 2 mit zwei Stellmotoren,

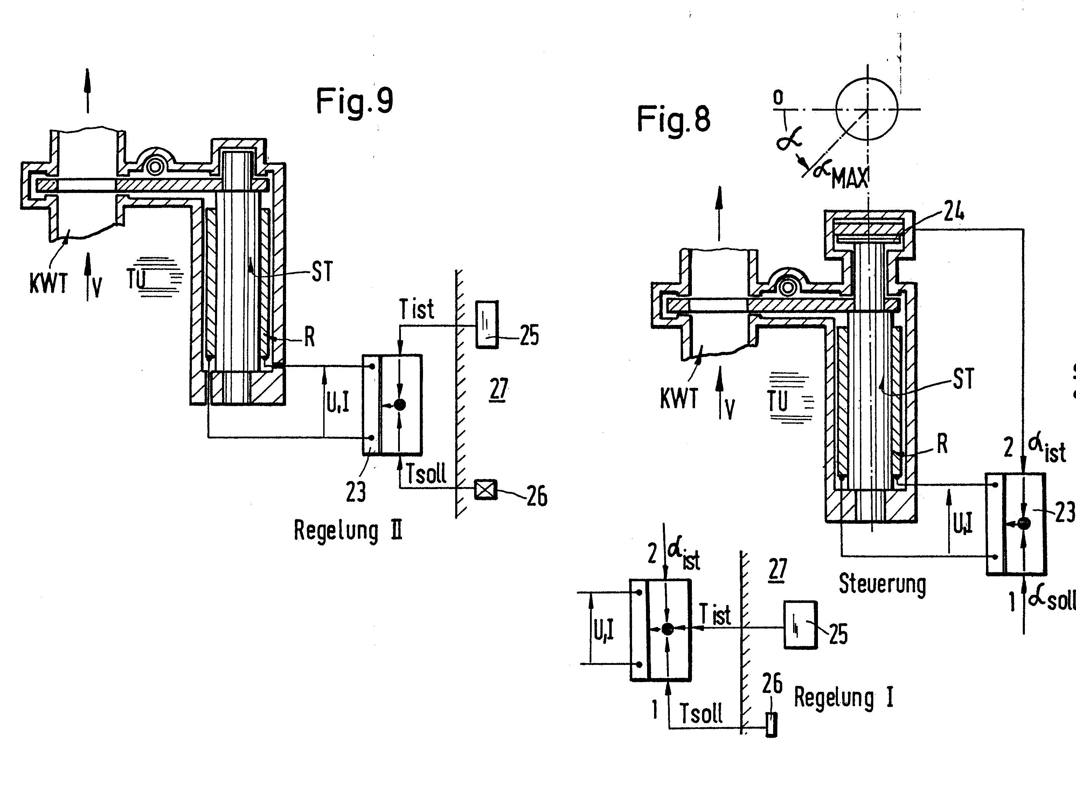

Fig. 8   eine schematisiert dargestellte Ausbildung
         der Regelung,

Fig. 9  eine zweite schematisiert dargestellte
Regelung und
Fig. 1o eine Grafik zum Energiebedarf der Absperrvorrichtung.

Bei der in Fig. 1 wiedergegebenen Absperrvorrichtung
1 handelt es sich um eine solche, die den Volumenstrom
in der Rohrleitung 2 beeinflussen bzw. regeln soll.

In einem Gehäuse 3 sind das das in Strömungsrichtung
4 fließende Medium 11 beeinflussende Stellorgan 5 und der
Stellmotor 6 angeordnet. Das Stellorgan 5 wird dabei über
den Stellmotor 6 um die Drehschieberachse 7 so geschwenkt,
daß, wie Fig. 2 verdeutlicht, die Rohrleitung ganz geöffnet,
teilweise geöffnet oder ganz geschlossen ist.

Der Stellmotor 6 ist von dem Metallbauelement 9 gebildet, das von der Heizung 8 umgeben ist. Das Metallbauteil
besteht aus einer speziellen Legierung mit vorzugsweise
martensitischem Gefüge. Das Martensitgefüge nimmt nach Erreichen einer legierungsspezifischen Umwandlungstemperatur
seine ursprüngliche Form vor der Kaltverformung teilweise
oder ganz wieder an. Dabei wird die notwendige Umwandlungstemperatur über die Heizung 8 zugeführt. Nach dem Abstellen
der Heizung bzw. nach dem Reduzieren der Energiezufuhr nimmt
das Metallbauelement 9 wieder die durch die Kaltverformung
erreichte Form an, wobei dieser Vorgang durch die am Stellorgan angreifende Rückstellfeder 1o beeinflußt, d.h. beschleunigt wird. Das Stellorgan 5 ist als Drehschieber 12
ausgebildet, wie insbesondere Fig. 2 verdeutlicht.

Mit ST ist die Stellmotortemperatur bezeichnet, mit
TU die Umgebungstemperatur und mit KWT die Kühlwassertemperatur. Hiermit wird verdeutlicht, daß diese verschiedenen
Temperaturen Einfluß auf den Stellvorgang nehmen und zweckmäßigerweise dabei Berücksichtigung finden sollen. Mit $\alpha$
ist der Verstellwinkel des Stellorgans 5 bzw. des Drehschiebers 12 bezeichnet, mit R der Heizungswiderstand und mit
U und I die Spannung bzw. der elektrische Strom, der der
Heizung 8 zugeführt wird. V ist schließlich der Volumenstrom
des Mediums 11.

Fig. 3a und 3b zeigen eine Absperrvorrichtung, wo das
Metallbauelement als Stellmotor 6 nicht unmittelbar auf
den Drehschieber 12 einwirkt, sondern vielmehr mittelbar
über die Zahnradsegmente 16, 17, die die Drehachse 15 des
Stellmotors 6 mit der Drehschieberachse 7 des Stellorgans
5 mechanisch verbinden.

Außerdem zeigt Fig. 3a eine Ausbildung der Absperrvorrichtung, bei der der Rückstellvorgang nicht nur über die
Rückstellfeder lo beeinflußt wird, sondern auch dadurch,
daß die Wärme des Metallbauelementes 9, der Heizung 8 und
des Gehäuses 3 systematisch abgeführt wird. Hierzu sind
die Kühlflächen 13 vorgesehen, die über den Bypass 14 mit
der Rohrleitung 2 in Verbindung stehen. Auf diese Weise
wird das Kühlwasser aus der Rohrleitung 2 den Kühlflächen
13 so zugeführt, daß die dort vorhandene Wärme kontinuierlich
abgeführt und der Rückstellvorgang beschleunigt wird. Mit
14' ist die Rückführleitung des Bypasses 14 bezeichnet,
über die das Medium 11 der Rohrleitung 2 wieder zugeführt
wird.

Ohne Drehachsen kommt die in Fig. 4 wiedergegebene
Absperrvorrichtung aus, bei der der Drehschieber 12 einseitig
fixiert ist. Die durch die Kaltverformung erzielte Formgebung ist durch die ausgezogenen Linien wiedergegeben, während
die strichpunktierten Linien die Form wiedergeben, die der
Drehschieber 12 vollzieht, wenn das Metallbauelement 9 über
die Heizung 8 mit Stellenergie versorgt wird. Wird die Stell-

- 18 -

energie versorgt wird. Wird die Stellenergie abgeschaltet, schwenkt der Drehschieber 12 automatisch in seine Ausgangslage zurück, wobei dieser Vorgang durch die Rückstellfeder lo unterstützt wird. Die Bezeichnung Drehschieber 12 ist hier an sich nicht korrekt, weil der Schieber nicht gedreht wird, sondern vielmehr verschwenkt wird.

Bei der Ausbildung nach Fig. 5 dagegen wird der Drehschieber 12 um die Drehschieberachse 7 geschwenkt, wozu ein hakenförmig ausgebildetes Metallbauelement 9 dient. Auch hier ist das Metallbauelement 9 einseitig fixiert und schiebt bei Zufuhr von Stellenergie den Schieber in die strichpunktiert dargestellte Position.

Fig. 6 zeigt eine Absperrvorrichtung, die als die Rohrleitung 2 umgebende Gabel 18 ausgebildet ist. Die gesamte Gabel 18 besteht aus der speziellen Legierung mit vorzugsweise martensitischem Gefüge, so daß bei Zufuhr von Stellenergie über die Heizung 8 eine entsprechende Verformung der Gabel 18 entweder im Bereich des Gabelfußes 19 oder der Gabelschenkel 2o, 21 eintritt. Auf diese Weise wird die hier elastisch ausgebildete Rohrleitung 2 so zusammengedrückt, daß der Volumenstrom beschränkt oder verhindert ist. Bei Zurückdrehen der Stellenergiezufuhr oder völligem Verzicht auf Zufuhr bildet sich die Gabel 18 wieder in die dargestellte Form zurück, so daß der Volumenstrom des Mediums 11 wieder unbehindert ist.

Zur Verhinderung von Lagerkräften sind dem um die Drehschieberachse 7 drehbaren Drehschieber 12 nach Fig. 7 zwei beidseitig der Drehschieberachse 7 angeordnete Metallbauelemente 9, 9' zugeordnet. Die beiden Metallbauelemente 9, 9' sind gleich ausgebildet und so geschaltet, daß sie das Stellorgan bzw. den Drehschieber 12 gleichmäßig um die Drehschieberachse 7 verschwenken.

Fig. 8 zeigt im oberen Teil eine einfache Möglichkeit, wie die Absperrvorrichtung gesteuert werden kann. Hierzu ist die Strombegrenzung 23 bzw. ein entsprechender Regler vorgesehen, über den die Sekundärspannung U, I der vom Drehpotentiometer 24 ermittelten Spannung entsprechend gesteuert wird. Der Heizungswiderstand R wird somit nur jeweils so weit mit Stellenergie versorgt, wie dies gemäß der Angabe des Drehpotentiometers 24 entsprechend notwendig ist.

Während bei der in dem oberen Teil der Fig. 8 wiedergegebenen Schaltung die Strombegrenzung 23 für die Heizung als Steuerung ausgelegt ist, in dem die Sollgröße mit der Istgröße verglichen wird, ist nach dem unteren Schema der Fig. 8 die Strombegrenzung für die Heizung ausgelegt als echte Regelung. Die Strombegrenzung 23 arbeitet bzw. erfolgt unter Berücksichtigung der über den Thermostat 25 im Fahrgastraum 27 ermittelten Temperatur, dem Verstellwinkel $\alpha$ ist sowie der Solltemperatur, die über den Sollwertgeber 26 im Fahrgastraum eingestellt werden kann.

Fig. 9 schließlich zeigt eine Regelung, bei der auf die Berücksichtigung des Verstellwinkels verzichtet ist, also auf das Drehpotentiometer. Hier begnügt man sich mit der Ermittlung der Ist- und der Solltemperatur jeweils im Fahrgastraum. Eine solche Regelung ist bei üblichen Klimaanlagen ausreichend, während die in Fig. 8 wiedergegebene Regelung insbesondere bei Automobilheizungen von Vorteil ist.

Das Diagramm nach Fig. lo verdeutlicht, daß die erfindungsgemäße Absperrvorrichtung 1 besonders vorteilhaft im Automobilheizungsbau zu verwenden ist. Im linken Teil des Diagramms sind die Sommerbedingungen, im rechten Teil die Winterbedingungen wiedergegeben.

Mit VS ist die Ventilstellung, mit SE die Stellenergie bezeichnet, während RT die Raumtemperatur und MUT die Metallumwandlungstemperatur bezeichnet. Mit TU1 ist die untere Umgebungstemperatur, mit TU2 die obere Umgebungstemperatur bezeichnet.

Im Sommer wird eine angenehme Temperatur im Automobil dadurch erreicht, daß zunächst das Ventil geöffnet ist. Es wird dann maximale Stellenergie zugeführt, wie die Kurve im mittleren Diagramm anzeigt. Damit öffnet sich das Ventil kontinuierlich, was anhand des unteren Diagrammteils gezeigt ist. Entweder bleibt dann durch Zufuhr einer bestimmten Halteenergie eine bestimmte teilweise geöffnete Ventilstellung gegeben oder das Ventil schließt völlig. Die unterschiedlichen Temperatureinflüsse bzw. die unterschiedlich erzielten Temperaturen sind im oberen Diagramm wiedergegeben, wobei von der oberen Umgebungstemperatur TU2 durch Sonneneinstrahlung u.ä. auszugehen ist. Die Raumtemperatur sinkt dann unter die obere Umgebungstemperatur, weil das Ventil durch Veränderung von VS geschlossen wird. Durch die Energiezufuhr erfolgt nämlich eine Erwärmung des Metallbauteils bis zum Erreichen der MUT, d.h. der Metallumwandlungstemperatur, woraufhin dann der kontinuierliche Stellvorgang durch die temperaturabhängige Gefügeumwandlung erfolgt und damit das Schließen des Ventils.

Auf der rechten Seite der Diagramme ist die Wirkung der Absperrvorrichtung im Winter wiedergegeben. Da das Ventil bzw. der Drehschieber 12 voll geöffnet ist, braucht zunächst Stellenergie überhaupt nicht zugeführt zu werden. Von TU1 aus steigen KWT und RT kontinuierlich an, bis die vorgesehenen Werte erreicht sind. Durch Zufuhr von Stellenergie SE erfolgt dann ein teilweises oder vollständiges Schließen des Drehschiebers, je nachdem, was bezweckt ist. Dargestellt ist hier die Zufuhr einer für die Einhaltung einer bestimmten Stellung des Drehschiebers notwendigen Stellenergie.

Mannesmann Aktiengesellschaft        24 109
Mannesmannufer 2
D-4000 Düsseldorf

---

Absperrvorrichtung für Automobilheizungssysteme

---

## P a t e n t a n s p r ü c h e

1. Absperrvorrichtung für gasförmige oder flüssige
Medien führende Rohrleitungen, die der Rohrleitung zugeordnet
den Durchfluß mit einem Stellorgan steuert, das über einen
Stellmotor angetrieben ist, insbesondere von Hand oder durch
entsprechende Regeleinrichtung betätigbares Schieberventil
im Heizungssystem von Automobilen,
d a d u r c h   g e k e n n z e i c h n e t ,
daß der Stellmotor (6) von einem Metallbauelement (9) aus
einer Legierung mit vorzugsweise martensitischem Gefüge
gebildet und das kaltverformbar ist und dem eine vorzugsweise
elektrisch betriebene, als Ohmscher Widerstand ausgebildete
Heizung (8) zugeordnet ist.

- 2 -

2. Absperrvorrichtung nach Anspruch 1,
d a d u r c h   g e k e n n z e i c h n e t ,
daß das Metallbauelement (9) durch Torsion, Zug, Druck oder
Biegung kaltverformbar und durch Wärmezufuhr seine ursprüngliche Form vor der Kaltverformung teilweise oder ganz wieder
annehmend ausgebildet ist.

3. Absperrvorrichtung nach Anspruch 1,
d a d u r c h   g e k e n n z e i c h n e t ,
daß der Heizung (8) eine Strombegrenzung (23) vorgelagert
ist.

4. Absperrvorrichtung nach Anspruch 1,
d a d u r c h   g e k e n n z e i c h n e t ,
daß dem Stellorgan (5) eine den Rückstellvorgang unterstützende Rückstellfeder (1o) zugeordnet ist.

5. Absperrvorrichtung nach Anspruch 1,
d a d u r c h   g e k e n n z e i c h n e t ,
daß das Metallbauelement (9) und/oder die Heizung (8) und/
oder das Gehäuse (3) Kühlrippen oder Kühlflächen (13) aufweist, vorzugsweise solche, die hohl ausgebildet und über
einen Bypass (14) mit der das Medium (11) führenden Rohrleitung (2) zu verbinden sind.

6. Absperrvorrichtung nach Anspruch 1,
d a d u r c h   g e k e n n z e i c h n e t ,

daß das als Stellmotor (6) dienende Metallbauelement (9)
bzw. das Stellorgan (5) im Ruhezustand geöffnet geschaltet
ist.

7. Absperrvorrichtung nach Anspruch 1,
d a d u r c h   g e k e n n z e i c h n e t ,
daß die Drehschieberachse (7) als Metallbauelement (9) ausgebildet ist und am freien Ende das als Drehschieber (12)
ausgebildete Stellorgan (5) aufweist.

8. Absperrvorrichtung nach Anspruch 1,
d a d u r c h   g e k e n n z e i c h n e t ,
daß der Drehschieberachse (7) mit dem Drehschieber (12)
ein als Stellmotor (6) ausgebildetes, auf sie ein Drehmoment
ausübendes Metallbauelement (9) zugeordnet ist, vorzugsweise
über Zahnradelemente (16, 17) mechanisch gekoppelt.

9. Absperrvorrichtung nach Anspruch 1 und Anspruch 7,
d a d u r c h   g e k e n n z e i c h n e t ,
daß die Drehschieberachse (7) konzentrisch von der Heizung
(8) eine Baueinheit bildend umhüllt ist, wobei beide vorzugsweise einen runden Querschnitt aufweisen.

1o. Absperrvorrichtung nach Anspruch 1,
d a d u r c h   g e k e n n z e i c h n e t ,
daß die Heizung (8) konzentrisch von der Drehschieberachse
(7) eine Baueinheit bildend umhüllt ist.

11. Absperrvorrichtung nach Anspruch 1,
d a d u r c h   g e k e n n z e i c h n e t ,
daß das Metallbauelement (9) einen flachen, rechteckigen
Querschnitt aufweist und einseitig oder zweiseitig auf den
großen Flächen die Heizung (8) trägt.

12. Absperrvorrichtung nach Anspruch 1,
d a d u r c h   g e k e n n z e i c h n e t ,
daß der Stellmotor (6), der aus einem frei drehbaren, spiralförmig kaltverformten Metallbauelement (9) besteht, gleichzeitig zwei wechselweise beschickbaren Rohrleitungen (2)
zugeordnet ist.

13. Absperrvorrichtung nach Anspruch 1,
d a d u r c h   g e k e n n z e i c h n e t ,
daß die Heizung (8) ein in einem Stromkreis (15) angeordneter
Ohmscher Widerstand ist, der über einen dem Armaturenbrett
zugeordneten Sollwertgeber (26) schaltbar ist.

14. Absperrvorrichtung nach Anspruch 1,
d a d u r c h   g e k e n n z e i c h n e t ,
daß der Drehschieberachse (7) ein Drehpotentiometer (24)
zugeordnet ist, das die Sekundärspannung mit dem Spannungsabfall abgleichend geschaltet ist.

15. Absperrvorrichtung nach Anspruch 1 und Anspruch 14,
d a d u r c h   g e k e n n z e i c h n e t ,
daß ein im Fahrgastraum (27) angeordnetes Thermostat (25)
mit dem Drehpotentiometer (24) die Sekundärspannung abgleichend geschaltet ist.

16. Absperrvorrichtung nach Anspruch 1 bis Anspruch 6,
d a d u r c h   g e k e n n z e i c h n e t ,
daß das Stellorgan (5) einseitig fixiert, partiell kaltverformt und dort von der Heizung (8) beeinflußt ausgebildet
und angeordnet ist.

17. Absperrvorrichtung nach Anspruch 1 bis Anspruch 6,
d a d u r c h   g e k e n n z e i c h n e t ,
daß das Stellorgan (5) drehbar gelagert und mit einem kaltverformbaren Metallbauelement (9) seitlich verbunden ist,
das seinerseits als Biegeelement wirkend angeordnet und
auf der dem Stellorgan gegenüberliegenden Seite mit einer
Heizung (8) versehen ist.

18. Absperrvorrichtung nach Anspruch 1,
d a d u r c h   g e k e n n z e i c h n e t ,
daß das Metallbauelement (9) die im Beeinflussungsbereich flexibel ausgebildete Rohrleitung (2) gabelförmig umfassend
und im Bereich des Gabelfußes (19) und/oder der Gabelschenkel
(2o, 21) eine Heizung (8) aufweisend ausgebildet ist.

19. Absperrvorrichtung nach Anspruch 1,
d a d u r c h   g e k e n n z e i c h n e t ,
daß um die Drehschieberachse (7) vorzugsweise zwei Metallbauelemente (9, 9') mit einer Heizung (8) eine Baueinheit bildend angeordnet sind und zwar so, daß sie mit dem Stellorgan
(5) ein Dreigelenk bilden.

2o. Absperrvorrichtung nach Anspruch 4,
d a d u r c h   g e k e n n z e i c h n e t ,
daß die Rückstellfeder (1o) als Metallbauelement mit Heizung
ausgebildet und wechselweise mit dem anderen Metallbauelement
(9) mit Heizenergie versorgt ist.

Fig.1

Fig. 2

0189879

Fig. 3a

Fig. 3b

0189879

Fig.4

10

U,I

12

8

9

R

0

α

α_{MAX}

Fig.5

8

U,I

12

R

10

9

1

0

7

α

α_{MAX}

0189879

Fig.7

Fig.6

# Fig.9

KWT  V  TU  ST  R

T ist  25

U,I  23  27

Tsoll  26

Regelung II

# Fig.8

$\alpha_{MAX}$  0  $\alpha$

24

KWT  V  TU  ST  R

Steuerung

2  $\alpha_{ist}$

23

1  $\alpha_{soll}$

U,I

2  $\alpha_{ist}$

U,I  T ist  25

27

1  Tsoll  26

Regelung I

5/5

0189879

European Patent
Office

EUROPEAN SEARCH REPORT

0189879

Application number

EP 86 10 1026

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 8, no. 244 (M-337) [1681], 9th November 1984; & JP - A - 59 121 266 (KEIHIN SEIKI SEISAKUSHO K.K.) 13-07-1984 | 1,2,4, 13 | F 16 K 31/02<br>B 60 H 1/00 |
| X | PATENTS ABSTRACTS OF JAPAN, vol. 8, no. 230 (M-333) [1667], 23rd October 1984; & JP - A - 59 110 979 (KEIHIN SEIKI SEISAKUSHO K.K.) 27-06-1984 | 1,2,4, 13 | |
| X | EP-A-0 110 685 (KRUMME)<br>* Page 12, page 15, line 24 * | 1,2 | |
| P,A | GB-A-2 146 411 (BARNES)<br><br>* Whole document * | 1,2,4, 13 | TECHNICAL FIELDS SEARCHED (Int. Cl.4) |
| A | US-A-3 877 638 (AMANO)<br>* Whole document * | 1 | F 16 K<br>B 60 H |
| A | GB-A-2 056 677 (ROBERTSON)<br>* Whole document * | 1 | |
| A | US-A-3 403 238 (BUEHLER)<br>* Whole document * | 1,2,7 | |

The present search report has been drawn up for all claims

| Place of search | Date of completion of the search | Examiner |
|---|---|---|
| THE HAGUE | 07-05-1986 | VERELST P.E.J. |